(19) Europäisches Patentamt
European Patent Office
Office européen des brevets

(11) **EP 2 353 024 B1**

(12) **FASCICULE DE BREVET EUROPEEN**

(45) Date de publication et mention
de la délivrance du brevet:
**31.08.2016 Bulletin 2016/35**

(21) Numéro de dépôt: **09763981.9**

(22) Date de dépôt: **04.12.2009**

(51) Int Cl.:
***G01S 5/16*** *(2006.01)*

(86) Numéro de dépôt international:
**PCT/EP2009/066448**

(87) Numéro de publication internationale:
**WO 2010/063844 (10.06.2010 Gazette 2010/23)**

(54) **PROCEDE DE GEO-LOCALISATION D'UN OBJET PAR MULTITELEMETRIE**

VERFAHREN ZUR LOKALISIERUNG EINES OBJEKTS DURCH MULTITELEMETRIE

METHOD FOR GEOLOCATING AN OBJECT BY MULTITELEMETRY

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **05.12.2008 FR 0806842
05.12.2008 FR 0806843**

(43) Date de publication de la demande:
**10.08.2011 Bulletin 2011/32**

(73) Titulaire: **THALES
92400 Courbevoie (FR)**

(72) Inventeur: **SIMON, Alain
F-78490 Les Mesnuls (FR)**

(74) Mandataire: **Henriot, Marie-Pierre et al
Marks & Clerk France
Conseils en Propriété Industrielle
Immeuble Visium
22, Avenue Aristide Briand
94117 Arcueil Cedex (FR)**

(56) Documents cités:
**EP-A- 0 583 972        EP-A1- 0 480 832
FR-A- 2 897 163        FR-A1- 2 801 682
GB-A- 624 026         US-A1- 2003 001 777
US-A1- 2003 142 523     US-A1- 2007 103 671**

• **BAIS A ET AL: "Single landmark based
self-localization of mobile robots" COMPUTER
AND ROBOT VISION, 2006. THE 3RD CANADIAN
CONFERENCE ON, IEEE, PISCATAWAY, NJ,
USA, 7 juin 2006 (2006-06-07), pages 67-67,
XP010919378 ISBN: 978-0-7695-2542-6**

**Description**

Le domaine de l'invention est celui de la géo-localisation d'un objet fixe non coopérant, au moyen d'un système optronique monté sur une plate-forme mobile. Par objet non coopérant, on entend un objet discret n'émettant pas de signal dans son environnement (sous forme d'ondes électromagnétiques notamment) et ne présentant pas de comportement coopératif (en stationnant en un lieu disposant de caractéristiques spécifiques ou prévues par avance en particulier). L'objet peut être situé à plusieurs dizaines de kilomètres.

Depuis l'origine de la navigation côtière ou astronomique, des méthodes sont utilisées pour localiser un objet en comparant sa position apparente par rapport à des positions connues d'objets répertoriés désignés amers.

On sait aussi procéder à une localisation par comparaison manuelle ou automatique d'images de l'objet avec des données de références telles que des images cartographiées ou des données relevées sur le terrain. Les résultats obtenus sont sensibles au diachronisme entre ces deux sources (notamment aux différences d'orientation entre les images de l'objet et celle des images cartographiées, aux différences de datation et de bande spectrale des deux sources). L'amélioration des dispositifs instrumentaux de mesure en temps réel de position et d'attitude des plates-formes, de la modélisation des équations d'observation décrivant la géométrie de prise de vue des images, des techniques numériques d'estimation et des moyens de calcul ont permis de systématiser et d'automatiser certains traitements de base pour faciliter l'interprétation et la superposition ou fusion de données géographiques (stéro-restitution, aérotriangulation, rectification, ...). Ces techniques ont contribué à réduire l'impact des erreurs d'orientation des clichés sur la géo-localisation du contenu image.

Ces approches présentent plusieurs inconvénients :

- le recueil d'objets ou de relevés de terrain sur les sites représente un coût important et reste contraint par le vieillissement avec l'évolution temporelle, naturelle ou artificielle, de l'environnement,
- la comparaison avec l'objet présente quelques inconvénients spécifiques (contraintes temps réel, robustesse, contenu image) avec des limitations dues à des fonds peu texturés comme par exemple dans le cas d'un navire sur l'océan, ou au contraire dues à des fonds à fortes textures présentant des quasi-périodicités,
- la préparation pour embarquer et traiter des volumes d'information importants et spécifiques,
- le besoin d'une intervention manuelle, même mineure, pour corriger un éventuel écart est incompatible d'un délai rapide d'élaboration de l'information.

Dans le cas où l'on ne dispose pas d'information a priori sur l'objet, telle que la taille ou le volume, les techniques utilisant une connaissance spécifique sur ces caractéristiques ne sont pas éligibles. De plus les performances atteintes par ces techniques pour des objets à grande distance sont par ailleurs très insuffisantes en regard de l'objectif de qualité recherché. On vise en effet des performances de localisation de classe métrique.

Pour les opérations nécessitant l'exploitation des informations images à bord de la plate-forme et en cours de recueil, une autre technique de localisation, dite technique de géo-référencement direct a été développée. Elle est basée sur un dispositif instrumental, embarqué à bord d'une plate-forme, constitué d'un dispositif d'acquisition d'images de la scène où se situe l'objet, de moyens de positionnement de la plate-forme dans un repère terrestre tels qu'un système GPS « Global Positioning System », et de moyens pour déterminer l'attitude de l'image dont :

- une centrale de navigation inertielle (CNI) sur la plate-forme pour déterminer son orientation dans le repère terrestre,
- des moyens de mesure du calage du capteur sur la plate-forme pour déterminer l'orientation du capteur dans le repère de la plate-forme,
- des moyens d'orientation de la ligne de visée (LdV) par rapport à des axes de référence du capteur, au moyen d'éléments mécaniques (codeurs) ou inertiels (UMI).

Une fois l'image acquise, deux variantes peuvent être utilisées pour déterminer la position géodésique de l'objet :

- la première recourt à un modèle altimétrique de la scène tel qu'un Modèle Numérique Terrestre dans l'hypothèse où l'objet se trouve sur la surface terrestre ; la position de l'objet est alors obtenue en intersectant, depuis la position du capteur, la direction absolue définie par l'attitude image avec le modèle terrestre (des deux solutions obtenues, ta position correcte de l'objet correspond à celle de distance la plus courte, l'autre est située à l'opposée de la surface terrestre) ;
- la seconde utilise une mesure de distance sur l'objet au moyen d'un télémètre embarqué dans le capteur et harmonisé à l'image.

Pour les opérations autorisant un délai dans l'utilisation des informations images à bord de la plate-forme des techniques de localisation basées sur la vision stéréoscopique peuvent être utilisées pour déterminer la localisation de l'objet de manière discrète. Ces méthodes souffrent encore de la qualité des mesures d'attitude, de la précision limitée de la mesure de distance obtenue par la vision stéréoscopique, et des difficultés à associer de manière robuste et automatique les caractéristiques images de l'objet. On peut citer à ce sujet la demande de brevet FR 06 01125.

On peut également citer comme art antérieur, le document US 2007/103671 qui décrit un procédé de géo-localisation d'un objet fixe non coopérant au moyen d'un système embarqué à bord d'une plate-forme mobile, équipé de moyens d'acquisition de la position du système. Selon ce document, la position de l'objet est calculée à partir de la mesure de la distance, de l'angle d'azimut et de l'élévation et de la position du système par rapport à une seule position du système.

Le document EP 0480832 décrit un système pour déterminer les coordonnées spatiales des points au sol dont on connaît a priori la position approchée et où sont placés des réflecteurs de constitution complexe.

La publication « Single landmark based self-localization of mobile robots » de Bais A et al, décrit quant à elle un procédé d'auto positionnement d'un robot. »

La qualité des composants de mesure d'attitude, de coût abordable, tels que les compas magnétiques reste limitée à une performance de l'ordre de la dizaine de mrad de par la mauvaise connaissance du champ terrestre, sans parler des difficultés d'intégration à la structure ou des perturbations locales. Malgré l'évolution des composants inertiels la tendance indique qu'il faudra encore plusieurs années avant de disposer par ces techniques d'une géo-localisation de classe métrique et notamment dans des conditions de prises de vues d'intérêt correspondant à des vues obliques fortes (ou à grande distance de l'objet) où l'erreur de site devient très pénalisante vis-à-vis de l'erreur de géo-localisation planimétrique.

En effet, la centrale inertielle est utilisée pour connaître le cap, l'attitude et/ou la vitesse et la position de la plate-forme. Sa qualité est limitée par la performance des capteurs qui la composent (gyroscopes, gyromètres, accéléromètres, ...). Le seuil atteint par une centrale inertielle de classe aéronautique est de l'ordre du mrad ce qui est trop élevé pour la performance recherchée. Ces systèmes nécessitent de plus une initialisation et une correction des dérives au cours du temps. Enfin notons que l'accès à une localisation de classe métrique nécessiterait des composants inertiels de haute performance dont le prix est hors d'atteinte pour les équipements aéroterrestres.

Le montage du capteur sur la plate-forme introduit une erreur systématique qui nécessite une procédure de calibrage du biais angulaire. Ce calibrage est idéalement réalisé en temps réel et de manière dynamique puisqu'il dépend des conditions d'emploi thermique, mécanique ou géomagnétique.

Ces différentes erreurs se cumulent au niveau de la chaîne d'acquisition optronique. On va illustrer l'ordre de grandeur de ces erreurs par un exemple numérique. La centrale inertielle présente typiquement une erreur aléatoire de 1 mrad ; les moyens de calage présentent typiquement un biais statique de 10 mrad ; les moyens d'orientation de la LdV présentent typiquement une erreur aléatoire de 3 mrad. En absence ou après estimation de biais, il subsiste une erreur aléatoire globale d'environ 3 mrad qui se traduit par exemple par une erreur au sol de 70 m pour un objet au sol situé à 10 km acquis depuis un point d'observation à 20kft. Or on vise une performance métrique et à des distances plus grandes.

On peut encore citer les procédés de géo-localisation utilisant des techniques de latération (tri ou multi-latération) qui se basent sur des mesures de distances déterminées par exemple à partir de l'atténuation d'un signal ou de temps de vol (ToF acronyme de l'expression anglo-saxonne « Time Of Flight ») pour les plus performantes. Les techniques suivantes présentent comme inconvénient le besoin de coopération avec l'objet ou/et une contrainte d'émission électromagnétique (EM) de la part de celui-ci :

- le GPS classique utilise des mesures de distance par mesure de temps de propagation (TOA acronyme de l'expression anglo-saxonne « Time Of Arrival ») de signaux radioélectriques, et des récepteurs coopératifs pour localiser un récepteur coopérant ; la position de l'objet fixe ou mobile est déterminée par intersection de sphères.
- le GSM (Global System for Mobile communication) est basé sur des différences de mesure de temps (TDOA acronyme de l'expression anglo-saxonne « Time Différence Of Arrival ») pour positionner un récepteur personnel de type téléphone portable au sein d'un réseau d'antennes collaborant ; la position du récepteur personnel fixe ou mobile est déterminée par intersection d'hyperboles. La performance accessible est de 150 mètres en zone urbaine et 5 kilomètres en zone rurale.
- l'ESM acronyme de l'expression anglo-saxonne « Electronic Support Measure » est un capteur d'écoute passif qui permet de mesurer la direction angulaire d'arrivée de radiations EM émises par un objet fixe, et qui ainsi le localise avec une technique généralement fondée sur des différences de mesure de temps (TDOA).

Plus récemment, des techniques coopératives entre des plates-formes aéroportées et terrestres ont vu le jour. Dans ces scénarios, soit les plates-formes terrestres réalisent une localisation de qualité plus grande car à plus courte distance et réalisée depuis des stationnements fixes, soit la plate-forme aéroportée utilise les positions communiquées des plates-formes terrestres coopérantes présentes dans son image d'intérêt comme point d'amer pour réaliser le géoréférencement de l'image par une technique classique de photogrammétrie.

Les inconvénients des techniques listées ci-dessus font qu'il n'est pas envisageable de géo-localiser une cible ou un objet dans les conditions de réalisation suivantes :

- objet par nature non coopérant et non émissif de radiation EM,
- de manière automatique, donc sans intervention manuelle de l'utilisateur pendant le processus,
- de manière robuste vis-à-vis du contexte environnemental, c'est-à-dire indépendamment de la nature des structures présentes (ou absentes) dans la scène,
- en garantissant systématiquement une solution quelle que soit la position de l'objet dans l'espace, notamment dans des conditions de visée fortement obliques,
- avec une forte précision et une exactitude compatibles d'exigences de classe métrique,
- sans nécessiter de procédure de calibrage,
- sans nécessiter de moyen de mesure d'attitude (inertiel, magnétique, astrométrique),
- sans information a priori ou d'hypothèse sur la connaissance de l'objet,
- sans embarquer ni disposer d'informations sur l'environnement de l'objet,
- en estimant dynamiquement la qualité sur la position obtenue,
- en pouvant adapter le niveau de performance pour atteindre un niveau de consigne métrique,
- sans nécessiter systématiquement la mise en oeuvre de processus complexe d'optimisation,
- en pouvant opérer dans des conditions de discrétion maximale et à grande distance de l'objet,
- de manière autonome vis-à-vis de moyens de communication et d'infrastructures coopérantes.

En conséquence, il n'existe pas à ce jour de système ni de solution disponible pour répondre simultanément à l'ensemble des exigences précitées.

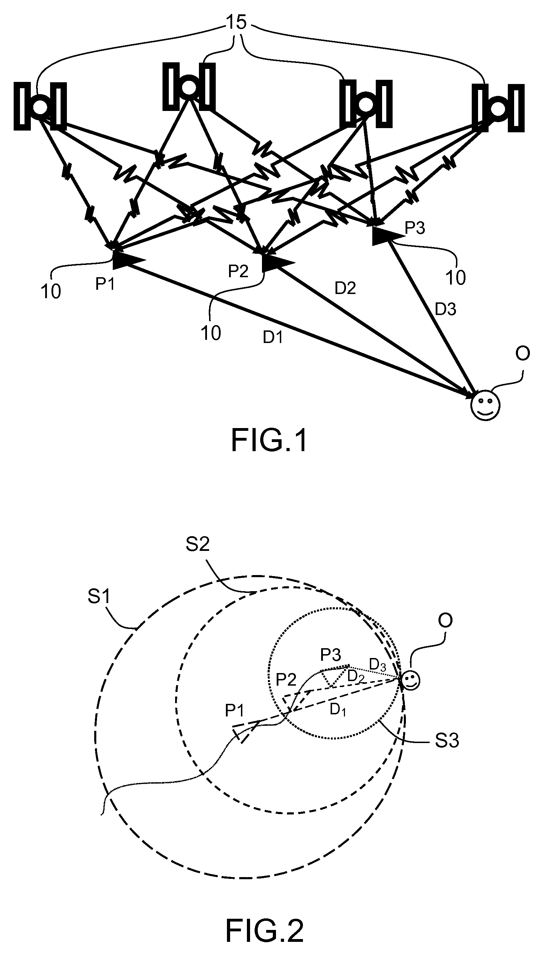

La solution de l'invention illustrée figure 1 est basée sur un instrument de mesure de distance tel qu'un télémètre, couplé à un instrument de mesure de position tel qu'un récepteur d'un système de positionnement GNSS (acronyme de l'expression anglo-saxonne « Global Navigation Satellite System »), tous deux installés à bord d'une plate-forme mobile 10.

Le principe de localisation de l'objet décrit en relation avec les figures 1 et 2 est le suivant.

On définit un premier couple de mesures P1-D1, P1 étant la position du télémètre et D1 la distance de l'objet O par rapport à cette position. L'objet O est alors positionné dans l'espace géodésique sur une sphère S1 centrée sur la position P1 du télémètre obtenue par le récepteur du système GNSS et dont le rayon est égal à la distance D1 fournie par le télémètre. Après déplacement de la plate-forme 1 et donc du télémètre, on définit un deuxième couple de mesures P2-D2 et la deuxième sphère S2 correspondante, et on positionne l'objet O sur cette deuxième sphère dont l'intersection avec la première définit un cercle sur lequel est situé l'objet O. Un troisième couple de mesures P3-D3 auquel correspond une troisième sphère S3, permet de rechercher l'objet à l'intersection du cercle et de cette troisième sphère donnant deux positions possibles pour l'objet dans l'espace absolu.

Le choix de la position de l'objet O entre ces deux positions possibles peut être réalisé soit par une connaissance approchée de la direction de la ligne de visée du télémètre soit par un quatrième couple de mesures P4-D4 ou par d'autres mesures complémentaires, soit par la connaissance d'une information a priori, comme par exemple l'information selon laquelle l'objet est voisin de la surface terrestre.

Dans le schéma précédent, lorsqu'on travaille avec le nombre minimal de mesure, on peut adopter indifféremment un repère local (ou centralisé) aux mesures ou un repère global (ou décentralisé tel que ECEF acronyme de l'expression Earth-Centered Earth-Fixed).

Dans le cas de mesures surabondantes, la solution de géolocalisation est obtenue dans un repère global :

- d'abord en cherchant une position initiale en utilisant le strict minimum de mesures
- ensuite en alimentant un estimateur par les mesures complémentaires. L'estimateur utilisé peut être un filtre de Kalman étendu ou tout autre estimateur permettant de disposer d'une position affinée par chaque mesure et délivrant une qualité associée représentant l'erreur de localisation.

Le principe présenté repose sur des sphères mais comme on va le voir, il s'agit d'une façon particulière de faire ; on peut envisager d'autres façons de déterminer la position de l'objet à partir des mêmes couples « position-distance ».

Plus précisément l'invention a pour objet des procédés de géolocalisation d'un objet fixe non-coopérant au moyen d'un système embarqué à bord d'une plate-forme, tel qu'ils sont définis dans les revendications annexées 1 et 2.

Ce procédé permet ainsi de fournir à partir de trois couples « position - distance de l'objet» dont uniquement deux couples mesurés, une solution de position de manière systématique c'est-à-dire non ambiguë et sans mettre en oeuvre de procédure d'optimisation.

Ainsi, il n'est pas indispensable d'utiliser les orientations qui pénalisent le bilan d'exactitude et de précision.

On réalise ainsi la localisation de l'objet par méthode de latération en utilisant uniquement les positions temporelles du télémètre et des mesures de distances associées ; ces mesures sont déduites de mesures de temps de vol (TOF), nous la qualifions ici de méthode de mesure DOA, acronyme de l'expression anglo-saxonne « Distance of Arrival ». Dans cette situation le bilan de localisation repose uniquement sur les contributions suivantes :

- les mesures de positions de la plate-forme et donc du télémètre qui ont la précision du GNSS c'est-à-dire une précision de classe métrique,
- les mesures de distances qui ont une forte précision par nature et qui sont de classe métrique,
- éventuellement la synchronisation des mesures de distance (capteur-objet) et de position du capteur, généralement bien assurée sur les plates-formes considérées.

Ces mesures de distance comme de position sont très peu biaisées et à très faible dérive d'où la forte exactitude absolue résultant sur la localisation.

En plus de la précision obtenue, la solution proposée résout les problèmes relatifs aux procédures évoquées :

- la qualité de localisation peut être ajustée en modifiant le déplacement du télémètre face à l'objet selon la liberté de l'utilisateur et en modifiant la fréquence des mesures selon le niveau de discrétion souhaité,
- le processus de mesure distance à l'objet par laser fait que l'objet n'a nul besoin d'émettre ou de collaborer avec l'utilisateur,
- les mesures exploitées n'ont pas besoin de mesures d'attitude ou d'orientation, et s'affranchissent ainsi de toute mesure d'angle relevée sur la plate-forme et le capteur et de la contribution d'erreur associée,
- la simplicité d'élaboration de la mesure ne nécessite pas de calibrage particulier si ce n'est l'harmonisation du télémètre à l'imagerie et leur synchronisation réalisées par ailleurs, comme on le verra plus loin,
- le système et le procédé proposés font qu'il n'est pas indispensable de disposer d'un modèle terrestre pour localiser l'objet en 3D ni même que celui-ci se situe à la surface terrestre.

Cette fonctionnalité peut être réalisée de manière totalement automatique par une fonction de poursuite sur l'objet accroché par le système imageur ou à l'extrême par un pointage, et si nécessaire recalage, manuel sur l'objet d'intérêt.

On note que sur de gros objets (ou à plus courte distance) il faut maintenir la position télémétrée au voisinage de la même zone. Dans cette circonstance une poursuite sur image et un pointage correct du télémètre sont souhaitables pour disposer d'une position bien caractérisée et d'une meilleure performance.

Selon une caractéristique de l'invention, un autre couple est obtenu par mesure de la distance de l'objet par rapport à une position du système distincte des positions précédentes, obtenue par les moyens d'acquisition de la position, et la distance étant obtenue par les moyens d'acquisition de la distance

Pour chaque couple, les mesures de distance et de position sont de préférence synchronisées par un moyen global (datation UTC « Universal Time Coordinates » associée au GPS) ou relatif (IRIG acronyme de l'expression anglo-saxonne « Inter-Range Instrumentation Group »).

Les distances sont obtenues à partir de mesures de distance. Celles-ci peuvent être basées sur la mesure du temps et la vitesse de propagation d'un signal qui réalise un aller retour entre le capteur et l'objet (télémètre, sonar) d'autres techniques peuvent être utilisées (avec performance moindre) comme la mesure d'atténuation du signal retour (RSS pour received signal strength).

Le calcul de la géo-localisation à partir des couples « position-distance » est avantageusement obtenu à partir de différence desdites distances et de somme desdites distances.

Selon une autre caractéristique de l'invention, un autre couple « position - distance de l'objet» est prédéterminé ; il est tel que la position est celle du centre de la Terre et la distance est celle de l'objet par rapport au centre de la Terre.

Dans certains cas, la distance de l'objet par rapport au centre de la Terre est obtenue à partir d'un modèle numérique de terrain MNT ou d'un modèle numérique d'élévation MNE ; l'objet étant situé sur un cercle dit « cercle de l'objet », cette distance est obtenue par la manière itérative suivante :

a- on fixe une position initiale (longitude_init, latitude_init), à l'intersection entre le cercle de l'objet et une sphère terrestre pour une hauteur prédéterminée,
b- on détermine la hauteur de cette position d'après le MNT, puis on détermine le rayon RT de la sphère terrestre en ajoutant cette hauteur au rayon local de l'ellipsoïde terrestre à la position précédente,
c- on détermine ensuite la position géodésique de l'objet sur le « cercle de l'objet » à l'intersection avec une sphère terrestre de rayon RT,
d- puis on réitère n fois les étapes précédentes jusqu'à ce qu'un seuil soit atteint.

Le seuil est par exemple une distance prédéfinie entre deux positions successives de l'objet (éventuellement limitée en planimétrie ou altimétrie), ou un nombre maximal fixé d'itération.

Pour gagner en précision, la hauteur est déterminée à l'étape b, par le MNT et le géoïde.

La description précédente relative au modèle numérique (MNT ou MNE) correspond au traitement des mesures pour établir une localisation décentralisée. Dans une approche centralisée, on définit un repère cartésien dont l'origine est située au milieu du segment dont les extrémités correspondent aux deux positions du télémètre lors des instants des mesures distances.

Le procédé peut comprendre en outre une étape de calcul de l'erreur sur la géo-localisation.

Il comprend éventuellement une étape de calcul de la trajectoire optimale de la plate-forme permettant de minimiser ladite erreur de géolocalisation.

L'invention concerne également un système de géo-localisation d'un objet fixe non coopérant embarqué à bord d'une plate-forme mobile, et équipé de moyens d'acquisition de distance entre l'objet et le système, de moyens d'acquisition de la position du système, et de moyens de traitement du procédé tel que décrit.

De préférence, il comprend des moyens de datation des positions et distances acquises et éventuellement un dispositif de suivi de l'objet, harmonisé avec les moyens d'acquisition de distance.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement plusieurs couples « position-distance » permettant de localiser l'objet,
la figure 2 illustre schématiquement le principe de l'invention dans le cas particulier de sphères représentées dans le plan par des cercles,
les figures 3 présentent schématiquement dans le plan deux cas particuliers sans solution,
la figure 4 illustre schématiquement dans le plan le procédé de localisation à partir de deux couples position-distance et d'un modèle numérique terrestre,
la figure 5 représente schématiquement dans le plan une zone d'incertitude lors de la géo-localisation par des sphères,
la figure 6 représente schématiquement dans le plan une zone d'incertitude lors de la géo-localisation par une ellipse et une hyperbole,
la figure 7 représente schématiquement en perspective l'intersection d'un ellipsoïde et d'un hyperboloïde,
la figure 8b illustre schématiquement le déroulement du calcul incrémental du rayon d'une sphère sur laquelle est situé l'objet et dont le centre est le centre de la Terre, la terminologie étant illustrée figure 8a,
la figure 9 représente schématiquement un exemple de système de géo-localisation selon l'invention.

D'une figure à l'autre, les mêmes éléments sont repérés par les mêmes références.

La solution de l'invention illustrée figure 1 est basée sur un récepteur d'un système de positionnement GNSS (acronyme de l'expression anglo-saxonne « Global Navigation Satellite System »), couplé à un télémètre, tous deux installés à bord d'une plate-forme mobile 10 et utilisés de la façon suivante.

De préférence, pour pouvoir suivre l'objet de manière automatique, le télémètre est associé à un dispositif d'imagerie permettant de visualiser l'objet à grande distance et de le maintenir au centre de l'image délivrée grâce par exemple à un écartomètre ; le télémètre est harmonisé à ce dispositif d'imagerie de manière à rester pointé vers l'objet.

La distance à l'objet O est mesurée par le télémètre pour différentes positions de celui-ci qui résultent du déplacement de la plate-forme ; ces mesures de distances D1, D2, D3 sont datées ainsi que les positions P1, P2, P3 de manière à être respectivement synchronisées entre elles. La position du télémètre est mesurée par le récepteur du système global de navigation par satellites (GNSS/GPS) ; on rappelle que la position d'un récepteur GNSS est généralement obtenue en combinant des mesures issues de 4 satellites 15 du système GNSS.

On décrit en relation avec la figure 2 un premier mode de réalisation du procédé selon l'invention, basé sur l'intersection de sphères.

Pour simplifier, la figure 2 est une représentation dans le plan contenant l'objet O et différentes positions P1, P2, P3, ...PN du télémètre. La géo-localisation de l'objet O est obtenue de la manière suivante :

- connaissant une position absolue P1 de la plate-forme et donc du télémètre, et la distance D1 à l'objet visé, celui-ci est positionné sur une première sphère S1 dans l'espace (représentée sur la figure par un cercle),
- après déplacement du télémètre, une autre mesure de distance D2 à l'objet visé fournit une seconde sphère S2 dans l'espace. L'objet O est alors situé sur le cercle matérialisé par l'intersection des deux sphères S1, S2 précédentes.

Une mesure de distance D3 depuis une troisième position P3 du télémètre définit une troisième sphère S3 dont l'intersection avec le cercle donne 2 points et donc 2 positions pour l'objet O.

Toute mesure (DN, PN) avec N>3, apporte une information surabondante et peut être traitée dans le processus d'estimation.

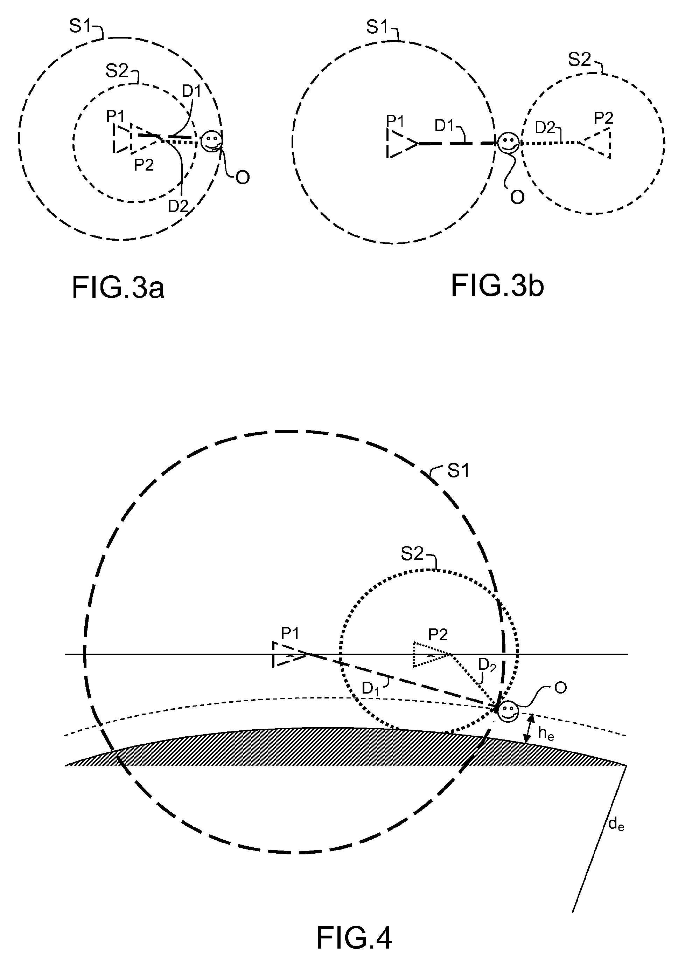

Comme on le verra plus loin avec les figures 3, pour disposer d'une position unique, il est nécessaire que les points Pk ne soient pas alignés. Dans cette situation de non observabilité, les différentes intersections de sphères s'accumulent toutes au voisinage d'un même cercle ce qui ne permet pas de déduire une position ponctuelle par une approche classique. En revanche l'utilisation proposée avec le MNT permet de résoudre cette difficulté et de maintenir une capacité de localisation dès lors que 2 mesures sont disponibles y compris en cas d'alignement des positions Pk.

La position réelle de l'objet est théoriquement fixée après trois mesures mais la nature non linéaire des équations conduit à une indétermination sous forme de deux solutions dont l'une correspond à celle de l'objet O. Pour lever l'indétermination résiduelle, on peut soit exploiter :

- une information a priori (par exemple, le point est au-dessus de la surface terrestre, le télémètre regarde vers l'avant de la plate-forme, ...),
- une mesure angulaire très approchée relevée sur la plate-forme,
- une quatrième mesure de distance depuis une autre position du télémètre.

On va à présent s'intéresser :

- à la capacité de géolocalisation et plus exactement à l'observabilité qui garantit l'existence d'une solution unique et,
- à la performance ou erreur de localisation caractérisée par l'écart entre la solution obtenue et la position vraie sous l'influence d'erreur de mesure.

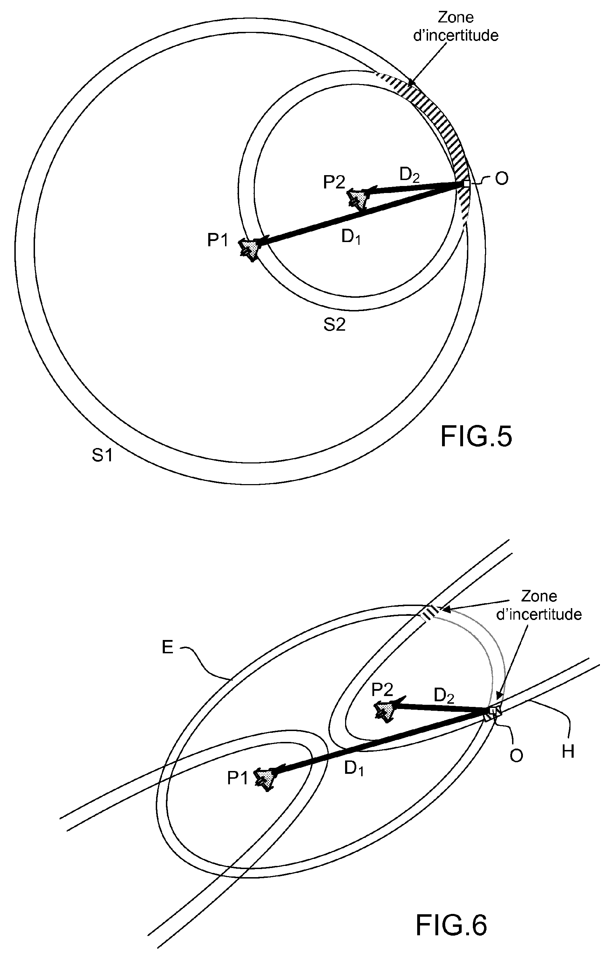

L'erreur sur la géo-localisation obtenue à partir de l'intersection de trois sphères est illustrée figure 5 dans un plan (pour simplifier) où seulement 2 couples de mesures sont nécessaires. L'erreur est comprise dans une zone d'incertitude (hachurée sur la figure) dont un exemple de taille correspondant à l'erreur aléatoire unitaire est représenté sur cette figure.

Dans certains cas illustrés par les figures 3a et 3b, les conditions géométriques d'acquisition des couples de mesures « position du télémètre-distance à l'objet » ne garantissent pas l'intersection des sphères S1, S2. Cette situation se présente notamment lorsqu'au moins deux positions (par exemple P1, P2) sont quasiment alignées avec l'objet O de sorte que S1 et S2 ne se coupent pas ; a fortiori lorsque P1, P2, P3 et O sont alignés et que les sphères S1, S2 et S3 ne se coupent pas.

Lorsqu'on travaille avec le nombre minimal de mesures, on peut adopter indifféremment un repère local (ou centralisé) aux mesures ou un repère global (ou décentralisé). Lorsqu'un nombre de mesures surabondant est utilisé pour obtenir la localisation à l'issue d'un processus d'estimation, les mesures sont alors traitées de manière décentralisée dans un repère commun. Ce repère est généralement un repère cartésien géocentrique (ECEF pour Earth-Centered Earth-Fixed) avec son origine au centre de la terre ou un repère cartésien local dit aussi topocentrique avec son origine fixée en une position géographique préférentiellement située au voisinage des mesures. Dans un premier temps, on va traiter ce problème dans un plan et dans un repère local, puis on généralisera à trois dimensions. Dans le plan, on peut ne considérer que deux couples de mesures et donc les deux cercles correspondants pour obtenir la position de l'objet qui résulte de l'intersection de ces deux cercles.

En lieu et place des deux cercles précédents, on propose d'utiliser une méthode efficace pour obtenir la solution notamment dans les cas illustrés ci-dessus où les équations de mesure n'assurent pas une solution pour le lieu de position de l'objet. Pour cela les couples « position-distance » sont utilisés de la façon suivante.

On définit deux coniques représentées figure 6, à partir de deux couples position-distance désignés P1 D1, P2D2 : une hyperbole H et une ellipse E sur lesquelles est positionné l'objet O.

Les deux foyers de chacune sont confondus avec les deux positions distinctes P1 et P2 du télémètre.

L'hyperbole H sur laquelle est positionné l'objet, est définie comme le lieu des points où la différence des distances D1-D2 est constante (en fait la valeur absolue de cette différence) ; l'ellipse E sur laquelle est également positionné l'objet, est définie comme le lieu des points où la somme de ces distances D1+D2 est constante.

Les demi-axes a, b de ces deux coniques s'expriment simplement et uniquement d'après trois distances : les deux distances de l'objet mesurées par le télémètre et la base qui est la distance P1 P2 entre les deux positions du télémètres obtenues d'après les deux mesures GNSS.

Dans les expressions suivantes, les indices E et H se réfèrent respectivement à l'ellipse et l'hyperbole ; on désigne par « a » le demi grand axe de la conique et « b », son demi petit axe :

- les équations ellipse et hyperboles vérifient :

$$HE : \begin{cases} \sqrt{(x-x_1)^2+(y-y_1)^2} + \sqrt{(x-x_2)^2+(y-y_2)^2} = D_1 + D_2 \\ \sqrt{(x-x_1)^2+(y-y_1)^2} - \sqrt{(x-x_2)^2+(y-y_2)^2} = D_1 - D_2 \end{cases}$$

L'équation de l'ellipse est donnée d'après ces éléments caractéristiques par :

$$\frac{x^2}{a_E^2} + \frac{y^2}{b_E^2} = 1$$

avec :

$$2a_E = D_1 + D_2$$

$$2c_E = \sqrt{(x_2-x_1)^2+(y_2-y_1)^2} = r_{12}$$

$$b_E^2 = a_E^2 - c_E^2 = \tfrac{1}{4}\left[(D_1+D_2)^2 - r_{12}^2\right]$$

Les équations des hyperboles sont données par :

$$\frac{x^2}{a_H^2} - \frac{y^2}{b_H^2} = 1$$

avec :

$$2a_H = D_1 - D_2$$

$$2c_H = \sqrt{(x_2-x_1)^2+(y_2-y_1)^2} = r_{12}$$

$$b_H^2 = c_H^2 - a_H^2 = \tfrac{1}{4}\left[r_{12}^2 - (D_1-D_2)^2\right]$$

On montre ainsi que les positions possibles de l'objet O sont données par les 4 couples de coordonnées ($\pm x_I$, $\pm y_I$) de la façon suivante :

$$x_I^2 = \frac{b_E^2 + b_H^2}{\dfrac{b_E^2}{a_E^2} + \dfrac{b_H^2}{a_H^2}} \quad ; \quad y_I^2 = \frac{a_E^2 - a_H^2}{\dfrac{a_E^2}{b_E^2} + \dfrac{a_H^2}{b_H^2}}$$

ou encore :

$$x_I^2 = \frac{(b_E^2 + b_H^2)a_E^2 a_H^2}{a_E^2 b_H^2 + a_H^2 b_E^2} \quad ; \quad y_I^2 = \frac{(a_E^2 - a_H^2)b_E^2 b_H^2}{a_E^2 b_H^2 + a_H^2 b_E^2}$$

Soit, en substituant les mesures de distances à l'objet depuis les positions P1 et P2 et en notant la base entre les deux mesures ($r_{12}$) :

$$x_I^2 = \left( \frac{D_1^2 - D_2^2}{2\,r_{12}} \right)^2 \quad ; \quad y_I^2 = \frac{\left[ (D_1 + D_2)^2 - r_{12}^2 \right]\left[ r_{12}^2 - (D_1 - D_2)^2 \right]}{4\,r_{12}^2}$$

Pour ne garder que la bonne position, on peut calculer les équations du cercle de centre P1 et de rayon D1 et du cercle de centre P2 et de rayon D2. La différence des équations de ces deux cercles donnant une relation linéaire en x et y, deux des quatre couples précédents sont éliminés (ils sont situés sur la branche d'hyperbole opposée à la direction de visée). L'autre position peut être éliminée par une connaissance a priori ou une information angulaire (du coté duquel le point est situé par rapport à la direction r$_{12}$) dont le niveau d'exactitude est suffisant pour discriminer les deux positions résultantes :

Ces expressions analytiques fournissent quatre solutions pour la position dont deux coïncident avec celles obtenues avec les deux cercles dans le repère local. Dans le cas où la distance D1 est supérieure à la distance D2 et où le capteur se dirige vers l'objet, ces deux solutions correspondent à un x$_I$ positif avec le choix réalisé pour l'orientation de l'axe. L'expression de la position dans le repère local est beaucoup plus simple que celle que l'on obtient en travaillant directement dans le repère global. On rappelle que le repère local est un repère relatif défini par rapport aux deux positions P1 et P2 : il s'agit d'un repère tri-dimensionnel dont un axe est porté par le segment P1P2. Le repère global est un repère absolu géographique.

Une fois la position obtenue dans le repère local, la position dans le repère global s'obtient de manière linéaire par simple translation et rotation.

En termes d'exactitude, la solution obtenue dans le repère local proposé est similaire de la solution obtenue dans le repère global à partir des deux cercles dans les configurations géométriques où celle-ci existe. Son principal avantage repose sur son existence permanente quelles que soient les erreurs de mesures et la géométrie. On montre que les ellipses et hyperboles se coupent toujours selon des angles droits pour toutes les positions de l'espace. Cette situation est différente dans le repère de la solution à base des deux cercles ou à base de deux hyperboles ou deux ellipses ou autre combinaison d'une de ces coniques avec un cercle. Cette méthode basée sur les ellipse et hyperbole présente l'avantage supplémentaire de séparer la zone d'incertitude et de toujours présenter un résultat obtenu comme on le voit sur les figures 5 et 6. Il facile de montrer analytiquement que les ellipses et hyperboles se coupent toujours selon des tangentes perpendiculaires alors que les deux cercles se coupent sous des angles pouvant être très faibles.

De plus, la méthode « hyperbole-ellipse » présente un intérêt certain dans les situations où la solution d'intersection avec des cercles est inexistante du fait des erreurs de mesure. La méthode « hyperbole-ellipse » permet toujours d'obtenir une solution et ceci de manière simple et rapide puisqu'elle ne requiert pas de processus de minimisation ou d'optimisation spécifique.

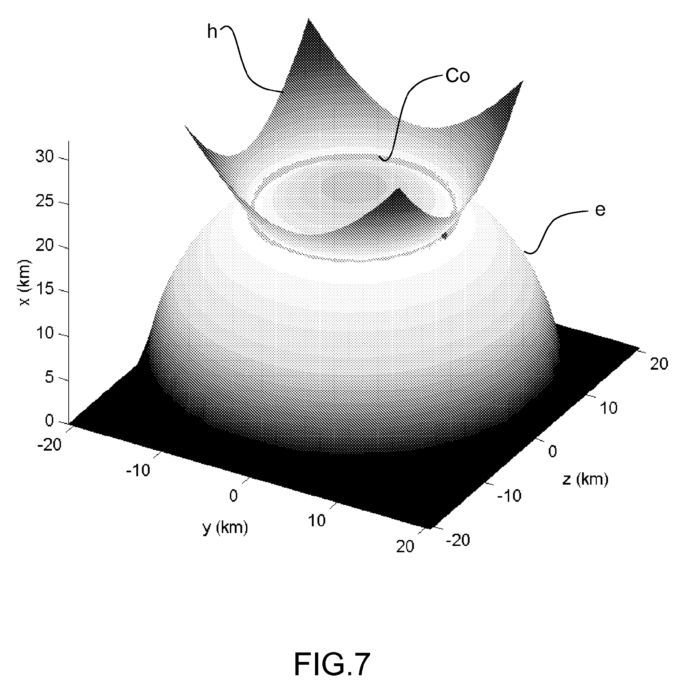

Dans l'espace la solution précédente se généralise facilement. Les deux positions P1, P2 du télémètre étant sur deux foyers, les surfaces utilisées, montrées dans un demi-espace figure 7 sont :

- l'ellipsoïde « e » comme lieu des points situant l'objet à la somme des distances constantes aux deux foyers,
- l'hyperboloïde « h » comme lieu des points positionnant l'objet comme différence de distances constante des deux foyers.

L'intersection des deux surfaces s'écrit simplement comme l'intersection d'un cylindre dont l'axe est porté par les deux positions du télémètre et deux plans perpendiculaires au cylindre. Quelles que soient les erreurs de mesure, on obtient donc systématiquement une intersection matérialisée par deux cercles dans l'espace, ce qui permet de traiter les situations où le télémètre s'approche de l'objet de manière quasi-rectiligne et quasi-frontale, illustrés par les figures 3a et 3b. On montre l'un de ces cercles Co sur la figure 7.

Plus précisément, on considère 2 mesures, les mieux appropriées parmi les 3 ; on place l'axe X dans la direction des deux positions P1 et P2 des télémètres aux deux instants de mesure, l'origine étant située en leur milieu et on considère les ellipsoïde et hyperboloïde de révolution correspondants.

Ces deux surfaces se coupent selon deux cercles équivalents aux deux sphères correspondant aux deux mesures de distance ayant permis de les générer. Dans la pratique l'équation du cercle est simple à obtenir avec les deux expressions précédentes. Celui-ci correspond à l'intersection :

- du cylindre à section circulaire dont l'axe est la direction de base de mesure (axe X) et dont le rayon R$_I$ vérifie :

$$R_I^2 = y^2 + z^2 = \frac{a_e^2 - a_h^2}{\dfrac{a_e^2}{b_e^2} + \dfrac{a_h^2}{b_h^2}}$$

- et des deux plans perpendiculaires à l'axe X dont les équations vérifient encore :

$$x_I^2 = \frac{b_e^2 + b_h^2}{\dfrac{b_e^2}{a_e^2} + \dfrac{b_h^2}{a_h^2}}$$

Les indices « e » et « h » se réfèrent respectivement à l'ellipsoïde et à l'hyperboloïde ; « a » désigne le demi grand axe de la conique et « b », le demi petit axe.

L'un des cercles désigné cercle de l'objet Co, est situé vers l'objet (généralement à l'avant du télémètre), le second qui est dirigé dans la direction opposée peut être facilement éliminé.

La position en 3D est ensuite obtenue par :

- soit par une mesure de distance complémentaire,
- soit par l'utilisation d'un modèle numérique qui permet de connaître la hauteur du terrain au niveau de l'objet, pour une solution plus efficace car la zone d'incertitude déterminée par l'intersection des courbes est plus réduite dans ce cas-là.

On va décrire l'utilisation d'un modèle numérique terrain MNT ou DTM acronyme de l'expression anglo-saxonne « Digital Terrestrial Model » ou d'un modèle numérique d'élévation MNE qui permet de connaître la hauteur du terrain au niveau de l'objet. On peut alors fixer une sphère dite sphère terrestre dont le centre est situé au centre de la Terre et dont le rayon est la distance entre le centre de la Terre et l'objet considéré comme illustré figure 4.

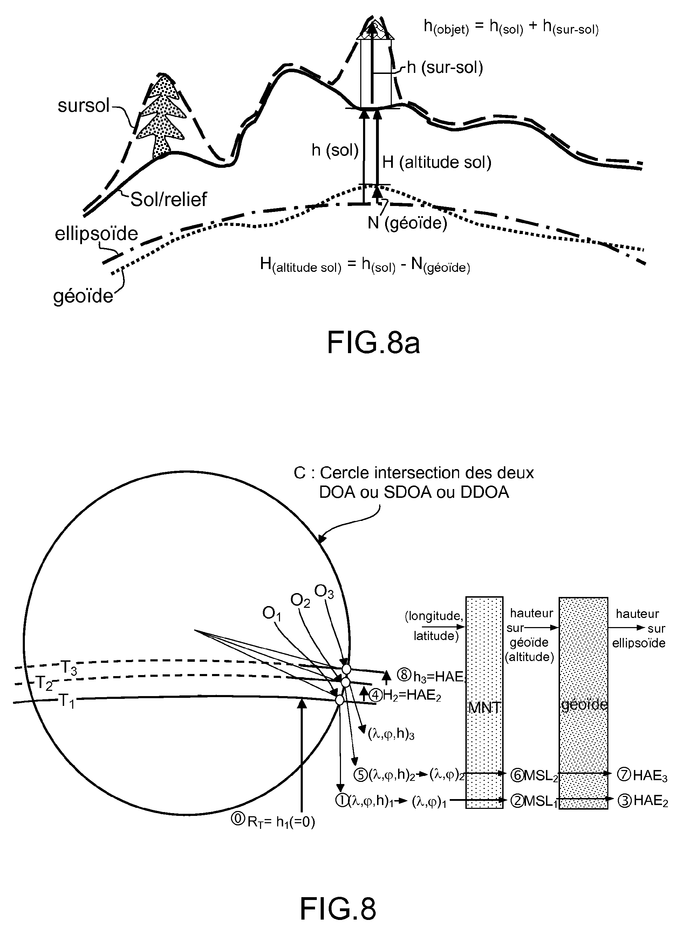

La Terre n'est pas rigoureusement assimilée à une sphère. La distance d'un point d'intérêt de l'objet (qualifiée de hauteur) au centre de la terre est déterminée par une somme de contributions illustrées figure 8a :

- la hauteur $h_{sol}$ du point du sol sur l'ellipsoïde aussi désignée HAE acronyme de l'expression anglo-saxonne « Height Above Ellipsoid » qui elle-même correspond à la somme de la hauteur $N_{géoïde}$ du géoïde sur l'ellipsoïde et de l'altitude $H_{altitude\ sol}$ du point telle qu'elle peut être renseignée dans un MNT (en référence au géoïde correspondant à la surface où le champ de gravité prend la valeur moyenne sur les mers MSL acronyme de l'expression anglo-saxonne « Mean Sea Level ») ; cette altitude $H_{altitude\ sol}$ est aussi désignée altitude orthométrique ;
- la hauteur propre de l'objet au dessus du terrain est $h_{sursol}$ ; cette information peut être obtenue par un Modèle Numérique de Sursol (MNS) ou d'Elévation (le MNE est un MNT fin). La hauteur de l'objet $h_{objet}$ par rapport au centre de la Terre est finalement donnée par la formule : hobjet = $h_{sol} + h_{sursol}$.

Dans la pratique, le GPS fournit directement la hauteur $h_{sol}$ sur l'ellipsoïde de la position du récepteur. Un MNT de faible résolution (typiquement DTED niveau 1 ou 2, DTED étant l'acronyme de l'expression anglo-saxonne « Digital Terrestrial Elevation Data ») fournit l'altitude orthométrique d'un point (hauteur $H_{altitude}$ par rapport au géoïde ou MSL) alors qu'un MNT de haute résolution (DTED niveau 4 à 5) fournit l'élévation des objets artificiels.

Le rayon est déterminé de manière incrémentale car la position de l'objet n'est pas connue a priori. Ainsi, on propose une procédure itérative qui, partant d'une hypothèse de hauteur va itérer entre l'information portée par les mesures et celle portée par le modèle. Il s'agit plus précisément de faire évoluer le rayon terrestre de la valeur donnée par le MNT et de calculer de nouvelles coordonnées géodésiques de l'objet avec la nouvelle sphère terrestre passant par la hauteur trouvée, puis d'utiliser les nouvelles coordonnées géodésiques pour disposer d'une nouvelle hauteur par le MNT. Le processus est stoppé lorsque l'écart entre deux positions planimétriques (ou altimétriques) successives est inférieur à un seuil prédéterminé.

Les deux mesures permettent de positionner l'objet O sur un cercle (situé dans un plan plutôt vertical dans la mesure où la plate-forme évolue dans un plan plutôt horizontal) ; par ailleurs le modèle situe l'objet à une hauteur fixée et donc sur une sphère dont le rayon de très grande dimension permet de l'assimiler à un plan quasi horizontal dans un repère géographique topocentrique (ou RGL).

Pratiquement ce processus est d'abord illustré sur la figure 8b dans un repère global ; le centre et le rayon du cercle C sont respectivement la projection dans le plan du cercle de la position P1 (ou P2) et de la distance D1 (ou D2).

Le déroulement du processus est le suivant :

1- A partir des deux mesures distances qui définissent le cercle C, et d'une sphère terrestre $T_1$ de rayon RT définie en supposant la hauteur du sol nulle ($h_{sol}$=0), une première position est obtenue. Dans la pratique on peut utiliser une autre hauteur de l'objet visé, comme par exemple celle au niveau de la plate-forme (ou au nadir du capteur). On obtient ainsi une première position géodésique $O_1$ ($\lambda$1, $\varphi$1, h(objet)1=0) qui est l'intersection du cercle C et de la sphère terrestre $T_1$. En réalité deux points sont solution mais l'un d'entre eux peut être éliminé simplement par l'une des méthodes déjà indiquées par ailleurs.

2- A partir des positions planimétriques (longitude $\lambda$1 et latitude $\varphi$1 géodésiques) obtenues, l'utilisation du MNT donne une nouvelle hauteur sur le géoïde $H_{altitude\,sol}$1 ou altitude MSL1 acronyme de l'expression anglo-saxonne « Mean Sea Level » pour expliciter la référence d'altitude au niveau moyen des mers. Le passage entre cette hauteur sur le géoïde $H_{altitude\,sol}$1 à la hauteur sur l'ellipsoïde (HAE) $h_{sol}$2 est réalisé d'après la hauteur $N_{géoïde}$ du géoïde local. Cette information est embarquée sur le capteur car peu volumineuse et à faible évolution temporelle. On obtient $h_{sol}$2 selon la formule

$$h_{sol,\,n+1} = N_{géoïde} + H_{Altitude\,sol,\,n}\ \ (\text{ou } HAE_{n+1} = N_{géoïde} + MSL_n).$$

3- Disposant d'une nouvelle HAE (hauteur $h_{sol}$2) on déduit une nouvelle sphère terrestre $T_2$ de rayon RT+ $h_{sol}$2 qui permet de trouver comme à l'étape n°1 une nouvelle position géodésique $O_2$ ($\lambda$2, $\varphi$2, h(objet)2), intersection de $T_2$ et du cercle C.

4- Comme à l'étape n°2, on utilise à nouveau les coordonnées ($\lambda$2, $\varphi$2), et le MNT pour trouver une nouvelle $H_{altitude\,sol}$ 2 puis le géoïde pour trouver une nouvelle HAE (hauteur $h_{sol}$3) dont on déduit une sphère $T_3$ de rayon RT+$h_{sol}$3 et une nouvelle position $O_3$ ($\lambda$3, $\varphi$3, h(objet)3), intersection de $T_3$ et du cercle C.

Le processus est itéré jusqu'à ce que la distance entre deux points consécutifs $O_n$ et $O_{n+1}$ soit inférieure à une distance de référence.

Le processus est maintenant décrit en utilisant le MNT dans le repère local. Le passage du repère global, par exemple ECEF, à ce repère local ne fait intervenir que des rotations et une translation ; aussi l'équation de l'ellipsoïde se transforme en une autre équation d'ellipsoïde (idem pour l'équation de la forme sphérique approchée qui se transforme en l'équation d'un autre sphère). Dans le détail, cette approche part de l'expression de la surface de l'ellipsoïde terrestre en coordonnées géocentrique, l'ellipsoïde passant par un point de hauteur h, s'écrit :

$$\frac{X_G^2 + Y_G^2}{(a+h)^2} + \frac{Z_G^2}{(b+h)^2} = 1$$

Dans le référentiel topocentrique, compte tenu des équations de passage du système de coordonnées géocentrique (ECEF) au système de coordonnées topocentrique $(X_G, Y_G, Z_G) \rightarrow (X_T, Y_T, Z_T)$, l'équation de cet ellipsoïde s'exprime par :

$$(b+h)^2 \left\{ X_T^2 + \left[ Y_T \sin\phi_0 - Z_T \cos\phi_0 - (N_0 + h_0)\cos\phi_0 \right]^2 \right\} +$$
$$(a+h)^2 \left\{ Y_T \cos\phi_0 + Z_T \sin\phi_0 + \left( N_0 \left| 1 - e^2 \right| + h_0 \right)\sin\phi_0 \right]^2 \right\} - (b+h)^2 (a+h)^2 = 0$$

où ($\lambda_o$, $\phi_o$, $h_o$) sont les coordonnées de l'origine du repère local et $N_o$ la grande normale à l'ellipsoïde en ce point :

$$N_0 = \frac{a}{\sqrt{1 - e^2 \sin^2 \phi_0}}$$

Notons qu'en assimilant la terre à une sphère ayant le rayon local $R_o$ donné par,

$$R_0 = \sqrt{M_0 N_0} \text{ avec : } M_0 = \frac{a(1-e^2)}{(1-e^2 \sin^2 \phi_0)^{3/2}}$$

l'équation de la surface terrestre dans le repère local s'écrit comme :

$$\{X_T^2 + [Y_T \sin\phi_0 - Z_T \cos\phi_0 - (N_0 + h_0)\cos\phi_0]^2\} +$$
$$\{Y_T \cos\phi_0 + Z_T \sin\phi_0 + (N_0|1-e^2| + h_0)\sin\phi_0]^2\} - (R_0 + h)^2 = 0$$

Soit l'expression d'une sphère dans le repère topocentrique qui s'écrit, à partir de constantes $A_o$, $B_o$, $C_o$ exprimées à partir des constantes de l'équation précédente, comme :

$$X_T^2 + Y_T^2 + Z_T^2 + 2(B_0 \cos\phi_0 - A_0 \sin\phi_0)Y_T + 2(B_0 \sin\phi_0 - A_0 \cos\phi_0)Z_T + A_0^2 + B_0^2 - C_0^2 = 0$$

Cette expression s'écrit ensuite simplement, en conservant la géométrie de la sphère, dans le repère local des deux mesures en appliquant les deux rotations autour de z et y évoquées précédemment. Ces deux rotations relient linéairement les coordonnées du repère local à celle du repère topocentrique. En substituant les deux équations du cylindre et du plan correspondant aux informations apportées par l'ellipsoïde et l'hyperboloïde on note que :

$$X_T^2 + Y_T^2 + Z_T^2 = X_L^2 + Y_L^2 + Z_L^2 = R_I^2 + x_I^2 = \text{constante}$$

Ainsi, l'intersection avec la sphère locale définit un plan dans l'espace 3D qui est paramétré selon la hauteur h de l'objet recherché. Comme dans l'approche décentralisée, chaque itération conduit à deux positions pour la position de l'objet. L'une d'elle correspond à la position recherchée, l'autre peut être simplement éliminée selon les approches déjà indiquées.

Le procédé selon l'invention peut inclure en outre une étape supplémentaire visant à réduire l'erreur de géo-localisation à une valeur minimale. Il s'agit d'une étape de calcul de la trajectoire optimale de la plate-forme et donc du télémètre et du système optronique, permettant de minimiser ladite erreur de géo-localisation.

Il existe plusieurs processus conduisant à définir de manière simple une trajectoire de la plate-forme pour disposer d'une meilleure performance de géolocalisation de l'objet visé. Pour ce faire on peut utiliser deux approches, basées sur l'information de Fisher :

- l'une optimise localement la trajectoire en déterminant à chaque pas de temps la meilleure orientation du vecteur vitesse de la plate-forme (ou son cap) et définissant ainsi de proche en proche la trajectoire,
- l'autre optimise globalement la trajectoire de 2 manières possibles :

  o soit en se fixant un délai, ou, de manière équivalente pour une vitesse moyenne donnée de la plate-forme, une distance maximale pouvant être atteinte depuis la position initiale
  o soit en se fixant deux positions extrêmes, l'une correspondant à la position initiale et l'autre à une position devant être atteinte par la plate-forme au cours de sa mission (voir un prolongement en mouvement rectiligne uniforme sur un délai de temps fixé).

Le calcul d'une solution optimale faisant intervenir des couples de mesures redondantes peut être réalisé en utilisant les propriétés de la solution obtenue d'après le procédé présenté et son erreur associée selon deux approches pour traiter plus de 3 couples « position, distance » :

- dans la première une méthode classique d'estimation utilise la localisation obtenue selon le procédé présenté, assurant la mise à disposition d'une solution de localisation initiale approchée et de sa covariance exprimées dans le repère global. L'optimisation est ensuite réalisée de manière classique par un estimateur en traitant les mesures par lots (batch de type moindre carrés pondérés) par une linéarisation des équations autour de la solution approchée ou par une approche récursive (de type filtrage de Kalman).

- dans la seconde, on utilise les N(N-1) / 2 couples de positions distance en calculant, pour chacun d'eux, une solution de position analytique dans le repère local puis dans le repère global en pondérant chaque solution en utilisant l'erreur qui lui est associée. La décorrélation des mesures du couple et entre chaque couple permet d'estimer la position résultante en traitant N-1 couples pour chaque nouveau couple disponible.

Les mesures de position du télémètre et les mesures de distance à l'objet doivent être datées pour être respectivement synchronisées avant l'étape de calcul de la géo-localisation basé sur ces mesures. Cette opération est réalisée simplement si les cadences respectives des mesures sont très différentes sinon en filtrant temporellement l'une ou les deux informations. A cette fin, les mesures position et distance sont préférentiellement datées avec la mesure de temps GPS ou par l'intermédiaire d'un signal suivant le standard IRIG de synchronisation format B.

La performance accessible repose sur :

- la performance du positionnement de la plate-forme avec généralement des moyens inertiels couplés au GNSS acronyme de l'expression anglo-saxonne Global Navigation Satellite System. Les progrès réalisés sur la performance de ce dernier permettent d'utiliser des dispositifs inertiels à coût réduit et l'arrivé prochaine de systèmes tels que Galiléo devrait encore améliorer les capacités de positionnement du capteur. L'évolution des traitements associés à ces techniques permettent d'envisager des exactitudes de positionnement de l'ordre de 10 cm (GPS-RTK). Pour obtenir une localisation de l'objet dont la performance est d'ordre métrique, il faut disposer d'une précision du même ordre voire d'un ordre de grandeur inférieur sur le positionnement du capteur. Pour cela, il est souhaitable de disposer d'une précision décimétrique sur la trajectographie et dans ce cas des techniques GPS différentielles (DGPS) doivent être mises en oeuvre. Ces techniques peuvent être basées sur :

  ■ le « DGPS code » ; elles corrigent alors les pseudo-distances (affectées par des erreurs d'horloge et d'éphémérides, la troposphère et l'ionosphère) entre le récepteur GPS mobile et les satellites qu'il reçoit. En fait, un récepteur de référence, stationné sur un point prédéterminé, reçoit à chaque instant la position des satellites dans l'espace, et calcule sa propre position. Ce récepteur peut donc déterminer la distance théorique à chaque satellite et le temps de propagation des signaux correspondants. La comparaison de ces valeurs théoriques avec les valeurs réelles permet de calculer des différences qui représentent des erreurs sur les signaux reçus. De ces différences dérivent les corrections de pseudo-distances définies par la commission technique de la radio sur les services maritimes (RTCM acronyme de l'expression anglo-saxonne « Radio Technical Commission for Maritime Services »). Ces corrections RTCM sont transmises au récepteur mobile, améliorant ainsi la précision de la localisation à un niveau métrique.
  ■ le « DGPS phase » ; elles utilisent alors des corrections de mesures de phase, normalisées par le RTCM, calculées au niveau de la référence puis émises vers le mobile. Ainsi, l'erreur de localisation peut être réduite à moins de 10cm en recevant 5kbit/s de corrections au format RTCM-RTK, pourvu que le récepteur mobile soit distant de quelques 10 km de la station de référence.

- La performance de mesure de distance des moyens envisagés est de classe métrique en aéroporté à grande distance. Elle dépend notamment des conditions d'acquisition (géométrie), de la qualité des mesures instrumentales et des traitements mis en oeuvre.
- La performance de datation et synchronisation accessible pour les mesures est de l'ordre de 10 $\mu$s.

Ces contributions permettent d'envisager une localisation de performance métrique à grande distance.

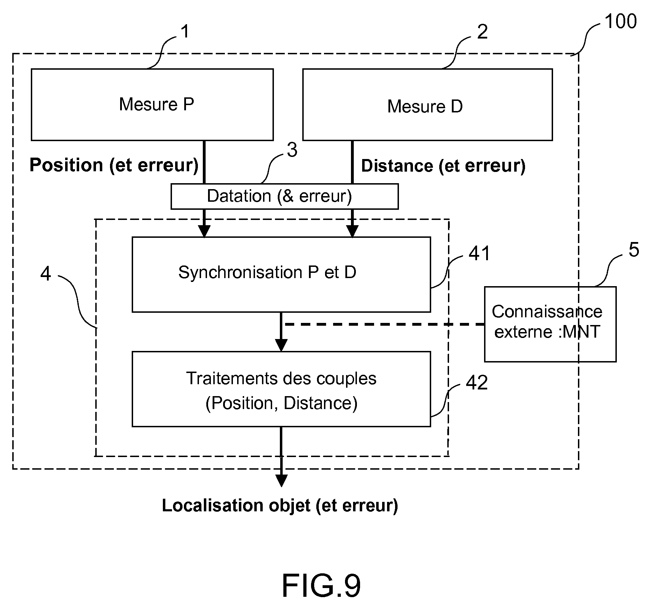

On se reporte à présent à la figure 9. Le procédé selon l'invention peut typiquement être mis en oeuvre dans un système 100 embarqué à bord d'une plate-forme et équipé de moyens d'acquisition 1, 2 des couples « position-distance » et d'une unité de traitement 4 du procédé décrit. Ces moyens d'acquisition sont par exemple :

- un télémètre 2 pour l'acquisition de la distance D et de l'erreur, ou tout autre appareil susceptible d'estimer une distance soit par temps de vol (par marquage de signaux EM, ...) soit par atténuation d'un signal,
- un dispositif GNSS 1 pour l'acquisition de la position P du système et de l'erreur, ou tout autre appareil susceptible d'estimer une position comme par un exemple un suiveur d'étoiles (« star tracker ») ou une méthode de positionnement sur des amers.

Le système peut aussi être muni d'un dispositif de datation 3 des distances et positions acquises.

L'unité de traitement comprend une sous-unité 41 de synchronisation des positions P et des distances D et une sous-unité 42 de traitement des couples « Position-Distance synchronisées », éventuellement à partir d'un couple obtenu par MNT 5.

Le système comprend de façon avantageuse :

- un dispositif d'acquisition d'image et de poursuite par imagerie, de manière à automatiser la géo-localisation sans nécessiter d'intervention manuelle en cours du traitement ;
- un dispositif d'harmonisation de l'axe laser sur l'axe du système imageur afin de ne pas dégrader l'exactitude de la mesure de distance à l'objet ;
- un détecteur infra-rouge afin de pouvoir réaliser la fonction de jour comme de nuit.

La plate-forme est typiquement un aéronef. Elle peut être également un véhicule terrestre ou maritime. Le système peut aussi être porté par un piéton.

**Revendications**

1. Procédé de géo-localisation d'un objet (O) fixe non coopérant au moyen d'un système (100) embarqué à bord d'une plate-forme mobile (10), équipé d'un télémètre apte à mesurer la distance (2) entre l'objet et le système, des moyens d'acquisition de la position (1) du système, le procédé comportant des étapes de :

   - acquisition de deux mesures de distance (D1, D2) de l'objet par rapport à deux positions (P1, P2) distinctes du système, définissant ainsi deux couples « position - distance de l'objet», les positions étant celles du système et étant obtenues par les moyens d'acquisition de la position (1), et les distances étant obtenues par le télémètre (2),
   - acquisition d'un troisième couple « position-distance de l'objet », la position (P3) étant celle du centre de la Terre et la distance (D3) étant celle de l'objet par rapport au centre de la terre, cette distance étant obtenue à partir d'un modèle numérique de terrain MNT ou d'un modèle numérique d'élévation MNE,
   - calcul de la géo-localisation de l'objet (O) à partir de ces trois couples « position-distance de l'objet », qui comprend une sous-étape de calcul de deux premières surfaces à savoir un hyperboloïde en fonction de deux positions (P1, P2) et de la différence des deux distances (D1, $D_2$) associées à ces positions, et un ellipsoïde en fonction de ces deux positions et de la somme des deux mêmes distances, l'objet étant situé à l'intersection de ces deux surfaces et d'une troisième surface déterminée à partir du troisième couple (P3, D3).

2. Procédé de géo-localisation d'un objet (O) fixe non coopérant au moyen d'un système (100) embarqué à bord d'une plate-forme mobile (10), équipé d'un télémètre apte à mesurer la distance (2) entre l'objet et le système, des moyens d'acquisition de la position (1) du système, le procédé comportant des étapes de :

   - acquisition de trois mesures de distance (D1, D2, D3) de l'objet par rapport à trois positions (P1, P2, P3) distinctes du système, définissant ainsi trois couples «position - distance de l'objet», les positions étant celles du système et étant obtenues par les moyens d'acquisition de la position (1), et les distances étant obtenues par le télémètre (2),
   - calcul de la géo-localisation de l'objet (O) à partir de ces trois couples « position-distance de l'objet », en utilisant uniquement les positions temporelles du télémètre et les mesures de distances associées, ce calcul comportant une sous-étape de calcul de deux premières surfaces à savoir un hyperboloïde en fonction de deux positions (P1, P2) et de la différence des deux distances (D1, D2) associées à ces positions, et un ellipsoïde en fonction de ces deux positions et de la somme des deux mêmes distances, l'objet étant situé à l'intersection de ces deux surfaces et d'une troisième surface déterminée à partir du troisième couple (P3, D3).

3. Procédé de géo-localisation d'un objet selon la revendication précédente, **caractérisé en ce que** pour chaque couple, les mesures de distance et de position sont synchronisées.

4. Procédé de géo-localisation d'un objet selon l'une des revendications 2 ou 3, **caractérisé en ce que** les distances de chaque couple sont obtenues à partir de mesures temporelles.

5. Procédé de géo-localisation d'un objet selon l'une des revendications précédentes, **caractérisé en ce qu'**au moins un autre couple est obtenu par mesure de la distance de l'objet par rapport à une position du système distincte des positions précédentes, obtenue par les moyens d'acquisition de la position (1), et la distance étant obtenue par le télémètre (2).

6. Procédé de géo-localisation d'un objet selon la revendication 1, **caractérisé en ce que** l'objet étant situé sur un cercle dit « cercle de l'objet », la distance du troisième couple est obtenue de la manière suivante :

a- on calcule une position initiale (longitude, latitude), à l'intersection entre le cercle de l'objet et une sphère terrestre dont le rayon est déterminé pour une hauteur prédéterminée de l'objet,

b- on détermine la hauteur réelle de cette position d'après le MNT, puis on détermine le rayon RT de la sphère terrestre en ajoutant cette hauteur au rayon de l'ellipsoïde de la Terre en cette position,

c- on détermine ensuite la position géodésique de l'objet sur le « cercle de l'objet » à l'intersection avec une sphère terrestre de rayon RT,

d- puis on réitère n fois les étapes b et c jusqu'à ce qu'un seuil soit atteint.

7. Procédé de géo-localisation d'un objet selon la revendication précédente, **caractérisé en ce que** le seuil est une distance prédéfinie entre deux positions successives de l'objet, ou le seuil est un nombre N à comparer à n.

8. Procédé de géo-localisation d'un objet selon l'une des revendications 6 ou 7, **caractérisé en ce qu'**à l'étape b, la hauteur est déterminée par le MNT et le géoïde.

9. Procédé de géo-localisation d'un objet selon l'une des revendications précédentes, **caractérisé en ce que** la troisième surface est obtenue à partir de deux positions l'une étant celle du troisième couple, de la différence des deux distances associées à ces positions définissant ainsi un autre hyperboloïde, ou de la somme de ces distances définissant ainsi un autre ellipsoïde et une étape de calcul de l'intersection entre les trois surfaces, où est situé l'objet.

10. Procédé de géo-localisation d'un objet selon l'une des revendications 1 à 8, **caractérisé en ce que** la troisième surface est une sphère définie en fonction de la troisième position et de la troisième distance.

11. Procédé de géo-localisation d'un objet selon l'une des revendications 9 ou 10, **caractérisé en ce qu'**il comprend en outre une étape de calcul de la covariance de la localisation obtenue et, une étape d'estimation pour traiter plus de 3 couples « position, distance », cette estimation étant initialisée à partir de cette localisation et de sa covariance.

12. Procédé de géo-localisation d'un objet selon l'une des revendications précédentes, **caractérisé en ce qu'**il comprend en outre une étape de calcul de l'erreur sur la géo-localisation.

13. Procédé de géo-localisation d'un objet selon la revendication précédente, **caractérisé en ce qu'**il comprend une étape de calcul de la trajectoire optimale de la plate-forme permettant de minimiser ladite erreur de géo-localisation.

14. Système de géo-localisation (100) d'un objet fixe non coopérant, ce système étant embarqué à bord d'une plate-forme mobile (10), et équipé d'un télémètre apte à mesurer la distance (2) entre l'objet et le système, de moyens d'acquisition de la position (1) du système, de moyens de traitement (4) configurés pour exécuter le procédé selon l'une des revendications précédentes.

15. Système de géo-localisation selon la revendication précédente, **caractérisé en ce qu'**il comprend des moyens de datation (3) des positions et distances acquises.

16. Système de géo-localisation selon l'une des revendications 14 ou 15, **caractérisé en ce qu'**il comprend d'un dispositif de suivi de l'objet, harmonisé avec le télémètre (2).

17. Système de géo-localisation selon l'une des revendications 14 à 16, **caractérisé en ce qu'**il comprend en outre des moyens de calcul de la trajectoire optimale du système, permettant de minimiser l'erreur de géo-localisation.

18. Système de géo-localisation selon l'une des revendications 14 à 17, **caractérisé en ce que** les moyens d'acquisition de la position (1) sont un système GNSS.

**Patentansprüche**

1. Verfahren zur Geolokation eines stationären, nicht kooperierenden Objekts (O) mithilfe eines Systems (100), das an Bord einer mobilen Plattform (10) eingebaut ist, das mit einem Entfernungsmesser zur Bestimmung der Entfernung (2) zwischen dem Objekt und dem System und mit Mitteln zur Positionsbestimmung (1) des Systems ausgestattet ist, wobei das Verfahren folgende Schritte umfasst:

- Ermittlung von zwei Entfernungsangaben (D1, D2) des Objekts gegenüber zwei verschiedenen Positionen (P1, P2) des Systems, wodurch zwei Paare "Position - Entfernung des Objekts" bestimmt werden, wobei es sich um die Positionen des Systems handelt und diese durch Mittel zur Positionsbestimmung (1) ermittelt werden und wobei die Entfernungen durch den Entfernungsmesser (2) bestimmt werden,

- Ermittlung eines dritten Paares "Position - Entfernung des Objekts", wobei es sich bei der Position (P3) um diejenige des Erdmittelpunkts und bei der Entfernung (D3) um diejenige des Objekts gegenüber dem Erdmittelpunkt handelt und wobei diese Entfernung ausgehend von einem digitalen Geländemodell DGM oder einem digitalen Höhenmodell DHM ermittelt wird,

- Berechnung der Geolokation des Objekts (O) ausgehend von diesen drei Paaren "Position - Entfernung des Objekts", welche einen Unterschritt zur Berechnung zweier erster Flächen, und zwar eines Hyperboloids in Abhängigkeit von zwei Positionen (P1, P2) und von der Differenz der zwei diesen Positionen zugeordneten Entfernungen (D1, D2) und eines Ellipsoids in Abhängigkeit von diesen zwei Positionen und von der Summe der beiden selben Entfernungen beinhaltet, wobei sich das Objekt an der Schnittstelle dieser beiden Flächen und einer dritten Fläche befindet, die ausgehend vom dritten Paar (P3, D3) bestimmt wird.

2. Verfahren zur Geolokation eines stationären, nicht kooperierenden Objekts (O) mithilfe eines Systems (100), das an Bord einer mobilen Plattform (10) eingebaut ist, das mit einem Entfernungsmesser zur Bestimmung der Entfernung (2) zwischen dem Objekt und dem System und mit Mitteln zur Positionsbestimmung (1) des Systems ausgestattet ist, wobei das Verfahren folgende Schritte umfasst:

- Ermittlung von drei Entfernungsangaben (D1, D2, D3) des Objekts gegenüber drei verschiedenen Positionen (P1, P2, P3) des Systems, wodurch drei Paare "Position - Entfernung des Objekts" bestimmt werden, wobei es sich um die Positionen des Systems handelt und diese durch Mittel zur Positionsbestimmung (1) ermittelt werden und wobei die Entfernungen durch den Entfernungsmesser (2) bestimmt werden,

- Berechnung der Geolokation des Objekts (O) ausgehend von diesen drei Paaren "Position - Entfernung des Objekts", indem lediglich die Zeitpositionen des Entfernungsmessers und die diesen zugeordneten Entfernungsmessungen verwendet werden, wobei diese Berechnung einen Unterschritt zur Berechnung zweier erster Flächen, und zwar eines Hyperboloids in Abhängigkeit von zwei Positionen (P1, P2) und von der Differenz der zwei diesen Positionen zugeordneten Entfernungen (D1, D2) und eines Ellipsoids in Abhängigkeit von diesen zwei Positionen und von der Summe der beiden selben Entfernungen beinhaltet, wobei sich das Objekt an der Schnittstelle dieser beiden Flächen und einer dritten Fläche befindet, die ausgehend vom dritten Paar (P3, D3) bestimmt wird.

3. Verfahren zur Geolokation eines Objekts gemäß dem vorangehenden Anspruch, **dadurch gekennzeichnet, dass** für jedes Paar die Entfernungs- und Positionsmessungen synchronisiert werden.

4. Verfahren zur Geolokation eines Objekts gemäß einem der Ansprüche 2 oder 3, **dadurch gekennzeichnet, dass** die Entfernungen eines jeden Paares ausgehend von Zeitmessungen ermittelt werden.

5. Verfahren zur Geolokation eines Objekts gemäß einem der vorangehenden Ansprüche, **dadurch gekennzeichnet, dass** zumindest ein weiteres Paar durch Entfernungsmessung des Objekts gegenüber einer Position des Systems, die sich von den vorangehenden Positionen unterscheidet und die mithilfe der Mittel zur Positionsbestimmung (1) ermittelt wird, bestimmt wird, wobei die Entfernung mithilfe des Entfernungsmessers (2) ermittelt wird.

6. Verfahren zur Geolokation eines Objekts gemäß Anspruch 1, **dadurch gekennzeichnet, dass** die Entfernung des dritten Paares folgendermaßen ermittelt wird, wobei sich das Objekt auf einem Kreis, genannt "Objektkreis", befindet:

a- man berechnet eine Ausgangsposition (Länge, Breite) an der Schnittstelle zwischen dem Objektkreis und einer Geosphäre, deren Radius für eine vorgegebene Höhe des Objekts bestimmt wird,

b- man bestimmt die tatsächliche Höhe dieser Position gemäß dem DGM und bestimmt dann den Radius RT der Geosphäre, indem man diese Höhe zum Radius des Ellipsoids der Erde an dieser Position hinzufügt,

c- man bestimmt anschließend die geodätische Position des Objekts auf dem "Objektkreis" an der Schnittstelle mit einer Geospähre vom Radius RT,

d- man wiederholt dann die Schritte b und c bis ein Grenzwert erreicht wird.

7. Verfahren zur Geolokation eines Objekts gemäß dem vorangehenden Anspruch, **dadurch gekennzeichnet, dass** der Grenzwert eine vorgegebene Entfernung zwischen zwei aufeinander folgenden Objektpositionen ist, wobei der Grenzwert eine Zahl N ist, die mit n zu vergleichen ist.

8. Verfahren zur Geolokation eines Objekts gemäß einem der Ansprüche 6 oder 7, **dadurch gekennzeichnet, dass** im Rahmen von Schritt b die Höhe mithilfe des DGM und des Geoids bestimmt wird.

9. Verfahren zur Geolokation eines Objekts gemäß einem der vorangehenden Ansprüche, **dadurch gekennzeichnet, dass** die dritte Fläche ausgehend von zwei Positionen - eine davon diejenige des dritten Paares -, von der Differenz zwischen den beiden diesen Positionen zugeordneten Entfernungen, sodass ein weiterer Hyperboloid bestimmt wird, oder von der Summe dieser Entfernungen, sodass ein weiterer Ellipsoid bestimmt wird, und ausgehend von einem Schritt zur Berechnung der Schnittstelle zwischen den drei Flächen, wo sich das Objekt befindet, bestimmt wird.

10. Verfahren zur Geolokation eines Objekts gemäß einem der Ansprüche 1 bis 8, **dadurch gekennzeichnet, dass** die dritte Fläche eine Sphäre ist, die in Abhängigkeit von der dritten Position und von der dritten Entfernung bestimmt wird.

11. Verfahren zur Geolokation eines Objekts gemäß einem der Ansprüche 9 oder 10, **dadurch gekennzeichnet, dass** es außerdem einen Schritt zur Berechnung der Kovarianz der ermittelten Lage und einen Schritt zur Schätzung umfasst, um mehr als 3 Paare "Position, Entfernung" zu verarbeiten, wobei diese Schätzung ausgehend von dieser Lage und ihrer Kovarianz initialisiert wird.

12. Verfahren zur Geolokation eines Objekts gemäß einem der vorangehenden Ansprüche, **dadurch gekennzeichnet, dass** es außerdem einen Schritt zur Berechnung der Abweichung der Geolokation umfasst.

13. Verfahren zur Geolokation eines Objekts gemäß dem vorangehenden Anspruch, **dadurch gekennzeichnet, dass** es einen Schritt zur Berechnung der optimalen Bahn der Plattform umfasst, die es ermöglicht, diese Abweichung der Geolokation zu minimieren.

14. System zur Geolokation (100) eines stationären, nicht kooperierenden Objekts, wobei dieses System an Bord einer mobilen Plattform (10) eingebaut ist und mit einem Entfernungsmesser zur Bestimmung der Entfernung (2) zwischen dem Objekt und dem System, mit Mitteln zur Positionsbestimmung (1) des Systems und mit Mitteln zur Bearbeitung (4) ausgestattet ist, die konfiguriert sind, um das Verfahren nach einem der vorangehenden Ansprüche auszuführen.

15. System zur Geolokation gemäß dem vorangehenden Anspruch, **dadurch gekennzeichnet, dass** es Mittel zur Datierung (3) der ermittelten Positionen und Entfernungen umfasst.

16. System zur Geolokation gemäß einem der vorangehenden Ansprüche 14 oder 15, **dadurch gekennzeichnet, dass** es eine Vorrichtung zur Verfolgung des Objekts umfasst, die auf den Entfernungsmesser (2) abgestimmt ist.

17. System zur Geolokation gemäß einem der vorangehenden Ansprüche 14 bis 16, **dadurch gekennzeichnet, dass** es außerdem Mittel zur Berechnung der optimalen Bahn des Systems umfasst, die es ermöglicht, die Abweichung der Geolokation zu minimieren.

18. System zur Geolokation gemäß einem der vorangehenden Ansprüche 14 bis 17, **dadurch gekennzeichnet, dass** es sich bei den Mitteln zur Positionsbestimmung (1) um ein GNSS-System handelt.

**Claims**

1. A method for geolocating a fixed, non-cooperative object (O) using a system (100) on board a moving platform (10), said system being equipped with a rangefinder (2) capable of measuring the distance between said object and said system and means (1) for acquiring the position of said system, said method comprising the following steps:

- acquiring two distance measurements (D1, D2) of said object relative to two distinct positions (P1, P2) of said system, thus defining two pairs "position-distance of the object", said positions being those of said system and being obtained by said position acquisition means (1), and the distances being obtained by said rangefinder (2);
- acquiring a third pair "position-distance of the object", the position (P3) being that of the centre of the earth and the distance (D3) being that of said object relative to the centre of the earth, said distance being obtained on the basis of a digital terrain model MNT or of a digital elevation model MNE;
- computing the geolocation of said object (O) on the basis of said three pairs "position-distance of the object", said computation comprising a sub-step of computing two first surfaces, namely a hyperboloid as a function of two positions (P1, P2) and of the difference in the two distances (D1, D2) associated with said positions, and an ellipsoid as a function of said two positions and of the sum of the same two distances, said object being located at the intersection of said two surfaces and a third surface that is determined on the basis of the third pair (P3, D3).

2. A method for geolocating a fixed, non-cooperative object (O) using a system (100) on board a moving platform (10), which system is equipped with a rangefinder capable of measuring the distance between said object and said system, and means (1) for acquiring the position of said system, said method comprising the following steps:

- acquiring three distance measurements (D1, D2, D3) of said object relative to three distinct positions (P1, P2, P3) of said system, thus defining three pairs "position-distance of the object", said positions being those of said system and being obtained by said position acquisition means (1), and the distances being obtained by said rangefinder (2);
- computing the geolocation of said object (O) on the basis of said three pairs "position-distance of the object", by only using the temporal positions of said rangefinder and the associated distance measurements, said computation comprising a sub-step of computing two first surfaces, namely a hyperboloid as a function of two positions (P1, P2) and of the difference in the two distances (D1, D2) associated with said positions, and an ellipsoid as a function of said two positions and of the sum of the same two distances, said object being located at the intersection of said two surfaces and a third surface that is determined on the basis of said third pair (P3, D3).

3. The method for geolocating an object according to the preceding claim, **characterised in that**, for each pair, the distance and position measurements are synchronised.

4. The method for geolocating an object according to any one of claims 2 or 3, **characterised in that** the distances of each pair are obtained on the basis of temporal measurements.

5. The method for geolocating an object according to any one of the preceding claims, **characterised in that** at least one further pair is obtained by measuring the distance of said object relative to a position of said system that is distinct from the preceding positions, which is obtained by said position acquisition means (1), with the distance being obtained by said rangefinder (2).

6. The method for geolocating an object according to claim 1, **characterised in that**, with said object being located on a circle called "object circle", the distance of said third pair is obtained as follows:

a- computing an initial position (longitude, latitude) at the intersection between said object circle and a terrestrial sphere, the radius of which is determined for a predetermined height of said object;
b- determining the actual height of said position according to the MNT, then determining the radius RT of the terrestrial sphere by adding this height to the radius of the ellipsoid of the earth in this position;
c- subsequently determining the geodetic position of said object on said "object circle" at the intersection with a terrestrial sphere with a radius RT;
d- then repeating steps b and c n times until a threshold is reached.

7. The method for geolocating an object according to the preceding claim, **characterised in that** said threshold is a predefined distance between two successive positions of said object or said threshold is a number N to be compared with n.

8. The method for geolocating an object according to any one of claims 6 or 7, **characterised in that** in step b the height is determined by the MNT and the geoid.

9. The method for geolocating an object according to any one of the preceding claims, **characterised in that** said third surface is obtained on the basis of two positions, one of which is that of said third pair, of the difference of the two distances associated with said positions, thus defining a further hyperboloid, or of the sum of said distances, thus defining a further ellipsoid and a step of computing the intersection between said three surfaces, where said object is located.

10. The method for geolocating an object according to any one of claims 1 to 8, **characterised in that** said third surface is a sphere that is defined as a function of said third position and of the third distance.

**11.** The method for geolocating an object according to any one of claims 9 or 10, **characterised in that** it further comprises a step of computing the covariance of the obtained location and a step of estimating for processing more than three "position-distance" pairs, said estimation being initialised on the basis of said location and of its covariance.

**12.** The method for geolocating an object according to any one of the preceding claims, **characterised in that** it further comprises a step of computing the geolocating error.

**13.** The method for geolocating an object according to the preceding claim, **characterised in that** it comprises a step of computing the optimal trajectory of the platform allowing said geolocating error to be minimised.

**14.** A system (100) for geolocating a fixed, non-cooperative object, said system being on board a moving platform (10) and being equipped with a rangefinder (2) capable of measuring the distance between said object and said system and means (1) for acquiring the position of said system and processing means (4) configured to execute the method according to any one of the preceding claims.

**15.** The geolocating system according to the preceding claim, **characterised in that** it comprises means (3) for dating acquired positions and distances.

**16.** The geolocating system according to any one of claims 14 to 15, **characterised in that** it comprises a device for tracking said object that is harmonised with said rangefinder (2).

**17.** The geolocating system according to any one of claims 14 to 16, **characterised in that** it further comprises means for computing the optimal trajectory of said system, allowing the geolocating error to be minimised.

**18.** The geolocating system according to any one of claims 14 to 17, **characterised in that** said position acquisition means (1) are a GNSS system.

FIG.1

FIG.2

FIG.3a

FIG.3b

FIG.4

FIG.5

FIG.6

FIG.7

$$h_{(objet)} = h_{(sol)} + h_{(sur-sol)}$$

h (sur-sol)

sursol

Sol/relief

h (sol)   H (altitude sol)

ellipsoïde

N (géoïde)

$$H_{(altitude\ sol)} = h_{(sol)} - N_{(géoïde)}$$

géoïde

FIG.8a

C : Cercle intersection des deux
DOA ou SDOA ou DDOA

$O_1$  $O_2$  $O_3$

$T_3$
$T_2$
$T_1$

(longitude,
latitude)

hauteur
sur
géoïde
(altitude)

hauteur
sur
ellipsoïde

⑧$h_3$=HAE

④$H_2$=HAE$_2$

$(\lambda,\varphi,h)_3$

MNT   géoïde

⑤$(\lambda,\varphi,h)_2$→$(\lambda,\varphi)_2$   ⑥MSL$_2$   ⑦HAE$_3$

①$(\lambda,\varphi,h)_1$→$(\lambda,\varphi)_1$   ②MSL$_1$   ③HAE$_2$

⓪$R_T$= $h_1$(=0)

FIG.8

**FIG.9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0601125
- US 2007103671 A
- EP 0480832 A